# EUROPÄISCHE PATENTSCHRIFT

(11) **EP 1 651 928 B1**
(45) Veröffentlichungstag und Bekanntmachung des Hinweises auf die Patenterteilung: **16.09.2009**
(21) Anmeldenummer: 04762550.4
(22) Anmeldetag: 30.07.2004
(51) Int. Cl.: G01D 5/20

(54) **MESSVORRICHTUNG UND VERFAHREN ZUR ERFASSUNG DER POSITION EINES ELEKTRISCH LEITFÄHIGEN MESSOBJEKTS**
MEASURING DEVICE AND METHOD FOR RECORDING THE POSITION OF AN ELECTRICALLY-CONDUCTING OBJECT FOR MEASUREMENT
DISPOSITIF DE MESURE ET PROCEDE POUR DETECTER LA POSITION D'UN OBJET DE MESURE ELECTROCONDUCTEUR

(30) Priorität: 04.08.2003 DE 10335931; 07.11.2003 DE 10352485; 08.12.2003 DE 10357576
(43) Veröffentlichungstag der Anmeldung: 03.05.2006
(73) Patentinhaber: Micro-Epsilon Messtechnik GmbH & Co. KG, 94496 Ortenburg (DE)
(72) Erfinder: HRUBES, Franz, 94086 Bad Griesbach (DE)
(74) Vertreter: Naumann, Ulrich
(86) Internationale Anmeldenummer: PCT/DE2004/001705
(87) Internationale Veröffentlichungsnummer: WO 2005/015131

(56) Entgegenhaltungen:
- DE-A1- 10 154 383
- DE-A1- 19 841 660
- US-A1- 2003 098 686

## Beschreibung

Die Erfindung betrifft eine Messvorrichtung und ein Verfahren zur Erfassung der Position eines elektrisch leitfähigen Messobjekts mit einem kontaktlos arbeitenden Wirbelstromsensor, wobei das Messobjekt eine Markierung aufweist und in einer vorgebbaren Richtung linear hin und her bewegbar ist, und wobei der Wirbelstromsensor quer zur Bewegungsrichtung des Messobjekts und in einem festen Abstand zum Messobjekt im Bereich der Markierung angeordnet ist, so dass bei einer Bewegung des Messobjekts die Markierung unterschiedlich stark in den Bereich des elektromagnetischen Feldes des Wirbelstromsensors eindringt, wodurch eine über einen vorgegebenen Messbereich hinweg zumindest weitgehend linear verlaufende Signaländerung am Wirbelstromsensor hervorgerufen wird.

Messvorrichtungen und Verfahren der hier in Rede stehenden Art sind seit langem in unterschiedlichen Ausführungsformen aus der Praxis bekannt, beispielsweise aus der DE 101 41 764 A1. Ganz allgemein werden derartige Messvorrichtungen und Verfahren eingesetzt, um Abstände, Verschiebungen oder Positionen gegen beliebige elektrisch leitende Messobjekte zu bestimmen. Als typische Anwendungen von berührungslosen Wegssensoren, insbesondere Wirbelstromsensoren, sei lediglich beispielhaft die Positionierung von Waferscheiben in der Halbleiterfertigung, die Detektion von Vibrationen oder Lagerschwingungen oder die Luftspaltüberwachung in Magnetlagern genannt. Eine konkrete Anwendung von berührungslosen Wegsensoren, auf die sich die Erfindung speziell bezieht, ist die Erfassung von sich in einer Richtung linear hin- und herbewegenden Messobjekten, beispielsweise die Vermessung von Eintauchtiefen oder die Überwachung von Kolbenhüben bzw. Zylinderpositionen.

Bei den genannten Messvorrichtungen ist der Sensor im Allgemeinen in der Verlängerung der Längsachse des zu detektierenden Bauteils angeordnet und parallel zu dieser ausgerichtet. Aufgrund der linearen Hin- und Herbewegung des Bauteils, beispielsweise eines Zylinderkolbens, vergrößert und verkleinert sich der Abstand zwischen der Stirnseite des Zylinderkolbens und dem Sensor entsprechend der aktuellen Position des Zylinderkolbens. Bei der Verwendung eines Wirbelstromsensors werden in Abhängigkeit des Abstands zwischen Kolbenstirnseite und Sensor unterschiedlich starke Wirbelströme in dem Kolben induziert, was ein entsprechendes Ausgangssignal am Wirbelstromsensor zur Folge hat. Das Ausgangssignal variiert linear mit der Position des Kolbens. Bei derartigen Anordnungen sind oftmals die relativ langen Bauformen problematisch, was insbesondere dann der Fall ist, wenn aufgrund der äußeren konkreten Gegebenheiten ohnehin nur ein begrenzter Raum für die Messvorrichtung zur Verfügung steht.

Eine derartige Situation ist insbesondere bei Einspritzdüsen gegeben, wie sie z.B. in Pumpe-Düse-Einspritzsystemen oder Common-Rail-Einspritzsystemen zum Einsatz kommen. HerKömmlicherweise wird zur Überwachung und Regelung der Einspritzung die Bewegung der Düsennadel - wie oben beschrieben - gegen den Schließkolben gemessen. Nachteilig ist hierbei zum einen die für die Einspritzung selbst nicht erforderliche lange Bauform der Einspritzdüse. Diese ist mechanisch extrem aufwendig und damit kostenintensiv sowohl in Herstellung als auch in der Wartung und Pflege. Des Weiteren ist nachteilig, dass die Positionsbestimmung der Düsennadel extrem toleranzbehaftet ist, da der nutzbare Messfleck sehr klein und der Sensor äußerst schwer und nur mit hohem Justageaufwand exakt zu positionieren ist.

Aus der DE 198 41 660 A1 ist eine Messvorrichtung zur Erfassung der Position eines elektrisch leitfähigen Messobjekts bekannt, wobei das zu detektierende Messobjekt linear hin und her bewegbar ist und eine Markierung aufweist. Ein Wirbelstromsensor ist quer zur Bewegungsrichtung des Messobjekts und in einem festen Abstand zum Messobjekt im Bereich der Markierung angeordnet, wobei eine Bewegung des Messobjekts eine über einen vorgegebenen Messbereich hinweg zumindest weitgehend linear verlaufende Signaländerung am Sensor hervorruft.

Aus der DE 101 54 383 A1 ist für sich gesehen eine Hochdruckeinspritzeinrichtung mit berührungsloser Stellwegsensoranordnung für den Ventilkörper bekannt. Der Ventilkörper ist mit einem Kurzschlussring gekoppelt. Eine lineare Verschiebung des Ventilkörpers und damit des Kurzschlussrings zwischen zwei Teilspulen eines Sensors bewirkt einerseits eine Feldverdrängung sowie andererseits eine Feldverschiebung. Beide Effekte werden detektiert und als bewegungsabhängiges Messsignal erfasst.

Der vorliegenden Erfindung liegt nunmehr die Aufgabe zugrunde, eine Messvorrichtung und ein Verfahren zur Erfassung der Position eines elektrisch leitfähigen Messobjekts der eingangs genannten Art anzugeben, wonach zum einen eine hohe Messempfindlichkeit und zum anderen eine gute Temperaturstabilität realisiert sind.

Erfindungsgemäß wird die voranstehende Aufgabe hinsichtlich einer Messvorrichtung zur Erfassung der Position eines elektrisch leitfähigen Messobjekts durch eine Vorrichtung mit den Merkmalen des Patentanspruchs 1 gelöst. Danach ist eine Messvorrichtung der eingangs genannten Art derart ausgestaltet und weitergebildet, dass die Markierung durch zwei stufenförmig ausgebildete Kanten gebildet ist und zwei Wirbelstromsensoren vorgesehen sind, die in einer Grundpositionierung derart angeordnet sind, dass die eine Kante des Messobjekts mit der Mittelachse des einen Wirbelstromsensors und die andere Kante des Messobjekts mit der Mittelachse des anderen Wirbelstromsensors übereinstimmt.

Des Weiteren ist die obige Aufgabe im Hinblick auf ein Verfahren zur Erfassung der Position eines elektrisch leitfähigen Messobjekts durch ein Verfahren mit den Merkmalen des Patentanspruchs 11 gelöst. Danach ist ein Verfahren der eingangs genannten Art derart ausgestaltet und weitergebildet, dass die Markierung durch zwei stufenförmig ausgebildete Kanten gebildet ist und zwei Wirbelstromsensoren vorgesehen werden, die in einer Grundpositionierung derart angeordnet werden, dass die eine Kante des Messobjekts mit der Mittelachse des einen Wirbelstromsensors und die andere Kante des Messobjekts mit der Mittelachse des anderen Wirbelstromsensors übereinstimmt.

In erfindungsgemäßer Weise ist erkannt worden, dass eine besonders hohe Empfindlichkeit der Messvorrichtung dann erreicht ist, wenn zum einen die Markierung in Form von zwei stufenförmig ausgebildeten Kanten realisiert ist und wenn zum anderen zwei Sensoren vorgesehen sind, wobei die beiden Sensoren jeweils auf eine der beiden Kanten abgestimmt sind. Konkret sind die Sensoren bei der erfindungsgemäßen Messvorrichtung in einer Grundpositionierung derart angeordnet, dass die eine Kante des Messobjekts mit der Mittelachse des einen Sensors und die andere Kante des Messobjekts mit der Mittelachse des anderen Sensors übereinstimmen. Mit einer derartigen Anordnung ist es möglich, ein Differenzsignal aus beiden Sensoren zu bilden, wobei ausgenutzt wird, dass bei einer Positionsveränderung des Messobjekts das Signal des einen Sensors kleiner und das Signal des anderen Sensors gleichzeitig größer wird und umgekehrt. Auf diese Weise ist eine Verdoppelung der Empfindlichkeit realisiert. Die erfindungsgemäße Messvorrichtung zeigt darüber hinaus ein äußerst temperaturstabiles Verhalten, da Temperaturfehler in der Mitte des Messbereichs, d.h. wenn beide Sensoren das gleiche Signal liefern, sich gegenseitig aufheben.

In vorteilhafter Weise könnte das Messobjekt zumindest bereichsweise eine stab- oder stangenähnliche Form aufweisen, wobei für viele Anwendungen insbesondere eine zylinderförmige Ausgestaltung des Messobjekts zweckmäßig wäre. Beim Einsatz der Messvorrichtung in einer Einspritzvorrichtung könnte dann eine konstruktiv exakte Führung des zylinderförmigen Messobjekts in der Zulaufbohrung mit sehr geringem Spiel realisiert werden, so dass die Linearbewegung des Messobjekts stets mit einem exakt gleichbleibenden Abstand zur Stirnseite des Sensors erfolgt.

In einer konkreten Ausführung könnten die beiden Kanten derart ausgebildet sein, dass sie zusammen eine Ausnehmung am Messobjekt definieren. Die Ausnehmung könnte in Umfangsrichtung des Messobjekts gesehen auf einen definierten Bereich beschränkt sein, wobei dann das Messobjekt derart ausgerichtet sein sollte, dass die Ausnehmung unmittelbar der Stirnseite des Sensors zugewandt ist. Alternativ könnten die beiden Kanten auch derart ausgebildet sein, dass die durch die Kanten definierte Ausnehmung am Messobjekt im Sinne einer ringförmig umlaufenden Nut gebildet ist.

Zur Überwachung des Zeitverhaltens einer Brennstoffeinspritzung, vorzugsweise in Automobilmotoren, könnte das Messobjekt in vorteilhafter Weise mechanisch mit einer Düsennadel einer Einspritzdüse gekoppelt sein. Durch eine solche Erfassung der Position der Einspritzdüse könnte die Einspritzung unter Verwendung geeigneter Regelverfahren so optimiert werden, dass in allen Betriebszuständen der beste Wirkungsgrad bzw. ein erwünschtes Verhalten des Motors erreicht ist. Zur Vermeidung einer aufwendigen mechanischen Verbindung zwischen Messobjekt und Düsennadel könnte das Messobjekt sogar in vorteilhafter Weise unmittelbar als Düsennadel ausgestaltet sein, mit anderen Worten könnte unmittelbar an der Düsennadel eine oben beschriebene Markierung vorgesehen sein.

In einer anderen konkreten Ausgestaltung könnte das Messobjekt mechanisch mit einem Servoventil einer Einspritzdüse gekoppelt sein. Auch in diesem Fall ist es möglich, eine Markierung unmittelbar am Servoventil selbst vorzusehen.

In einer besonders platzsparenden Bauweise und zur Realisierung einer äußerst kompakten Bauform könnten die Sensoren in die Gehäusewandung einer Einspritzdüse eingebaut sein. Dabei könnte vorgesehen sein, dass die Sensoren in in der Gehäusewandung ausgebildeten Kanälen verschiebbar sind, so dass die Stirnseiten der Sensoren zumindest annähernd bündig mit der Innenwand des Gehäuses abschließen. Die exakte Positionierung der Sensoren innerhalb der Kanäle könnte in Abhängigkeit von den Materialeigenschaften des Messobjekts gewählt werden, wobei hier insbesondere die ferromagnetischen Eigenschaften des Materials von Bedeutung sind.

Im Hinblick auf eine einfache Auswertung der Positionsmessung könnten die Wirbelstromsensoren in an sich bekannter Weise mit einem elektrischen Schwingkreis gekoppelt sein. Dieser könnte auf eine Grundpositionierung des Messobjekts abgestimmt sein. Bewegt sich das Messobjekt aus seiner Grundposition, so wird der Schwingkreis verstimmt. Mittels hinlänglich bekannter Brückenschaltungen kann schließlich ein entsprechendes Ausgangssignal bereitgestellt werden.

Es gibt nun verschiedene Möglichkeiten, die Lehre der vorliegenden Erfindung in vorteilhafter Weise auszugestalten und weiterzubilden, wozu auf die nachgeordneten Ansprüche zu verweisen ist. Nachfolgend wird anhand der Zeichnung die grundlegende Funktionsweise der erfindungsgemäßen Vorrichtung erläutert. In der Zeichnung zeigen
- Fig. 1: in einer Seitenansicht, schematisch, eine Messvorrichtung zur Erfas- sung der Position eines elektrisch leitfähigen Messobjekts beim Einsatz in einer Einspritzdüse und
- Fig. 2: in einer Seitenansicht, schematisch, eine Messvorrichtung beim Einsatz in einem Servoventil.

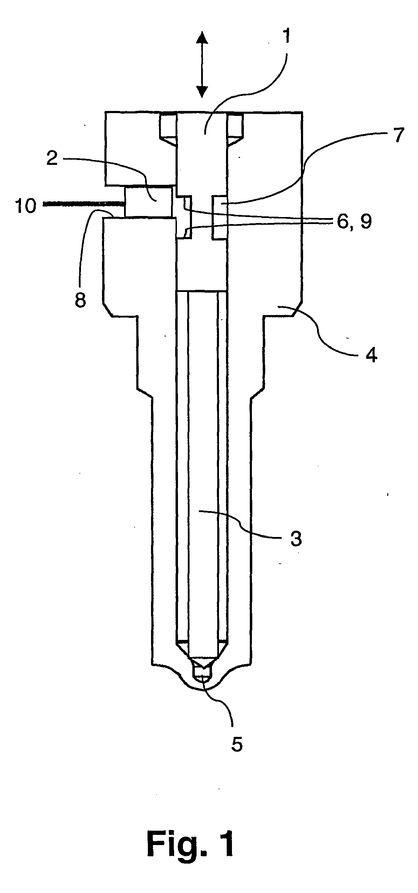

Fig. 1 zeigt in einer schematischen Seitenansicht eine Messvorrichtung zur Erfassung der Position eines elektrisch leitfähigen Messobjekts 1. Die Vorrichtung weist einen Wirbelstromsensor 2 auf, der quer zur Bewegungsrichtung des Messobjekts 1 angeordnet ist. Die Bewegungsrichtung des Messobjekts 1 ist durch den Doppelpfeil gekennzeichnet. Bei der Bewegung handelt es sich im Konkreten um die Hin- und Herbewegung einer Düsennadel 3, mit der das Messobjekt 1 mechanisch gekoppelt ist. Die Düsennadel 3 ist Teil einer Einspritzdüse 4 und gibt in einem festgelegten Zeitintervall die Düsenöffnung 5 frei, so dass Kraftstoff mit hoher Geschwindigkeit in den Brennraum austreten kann.

Zur Erfassung der aktuellen Position der Düsennadel 3 ist das Messobjekt mit einer Markierung 6 versehen, die als ringförmig um das Messobjekt 1 umlaufende Nut 7 ausgebildet ist. Der Wirbelstromsensor 2 ist quer zur Bewegungsrichtung des Messobjekts 1 und der Düsennadel 3 ausgerichtet und in einem festen Abstand zum Messobjekt 1 im Bereich der Nut 7 angeordnet. Dazu ist ein Kanal 8 in der Wandung der Einspritzdüse 4 vorgesehen, in den der Wirbelstromsensor 2 eingesetzt ist. Der Sensor 2 ist dabei derart positioniert, dass seine Stirnseite bündig mit der Innenwand der Einspritzdüse 4 abschließt und somit das Messobjekt beinahe berührt. Durch die konstruktiv sehr exakte Führung mit geringem Spiel ist gewährleistet, dass die Linearbewegung der Düsennadel immer im gleichen Abstand zur Stirnseite des Wirbelstromsensors 2 erfolgt.

Die Grundpositionierung des Sensors 2 und des Messobjekts 1 ist derart gewählt, dass die Messbereichsmitte exakt angegeben ist, wenn eine der beiden die Nut 7 bildenden Kanten 9 - im in Fig. 1 gezeigten Beispiel die obere der beiden Kanten 9 - mit der Mittelachse des Sensors 2 übereinstimmt. Das eine Ende des Messbereichs korrespondiert mit der Schließstellung der Düsennadel 3, während das andere Ende des Messbereichs erreicht ist, wenn die Düsennadel 3 ganz aufgemacht hat. Wenn die obere der beiden Kanten 9 genau mittig über dem Sensor 2 bzw. der Sensorspule sitzt, also die Grundpositionierung erreicht ist, hat die Düsennadel 3 die Hälfte des Gesamthubs zurückgelegt.

Bei einer Bewegung der Düsennadel 3 aus der Grundposition nach oben schiebt sich ein immer größer werdender Teil der Nut 7 vor den Sensor 2, so dass die in dem Messobjekt 1 induzierten Wirbelströme abnehmen. Umgekehrt schiebt sich bei einer Bewegung der Düsennadel 3 aus der Grundposition nach unten ein immer größer werdender Teil der Nut 7 aus dem Bereich vor dem Sensor 2, so dass die induzierten Wirbelströme zunehmen Diese vom Wirbelstromsensor 2 detektieren Veränderungen der induzierten Wirbelströme in Abhängigkeit von der Position des Messobjekts 1 bzw. der Düsennadel 3 werden in ein entsprechendes Ausgangssignal umgewandelt, das über einen ausreichend großen Messbereich ohne zusätzliche - im Allgemeinen äußert aufwendige - Linearisierungsmaßnahmen schaltungstechnischer oder rechnerischer Art weitgehend linear verläuft. Dies ist hinreichend, um die Position der Kante 9 und damit der Düsennadel 3 mit hoher Genauigkeit zu erfassen.

Unabhängig von der konkreten Ausführung der dargestellten Einspritzdüse 4 ist das Messprinzip auf die unterschiedlichsten Varianten von Einspritzdüsen universell anwendbar. Es spielt insbesondere keine Rolle, ob das Messobjekt 1 mit der Nut 7 mit der Düsennadel 3 mechanisch gekoppelt ist, oder ob eine an der Düsennadel 3 vorhandene Kante oder Nur bzw. speziell für die Positionsmessung an der Düsennadel 3 bereitgestellte Kante bzw. Nut zur Messung verwendet wird.

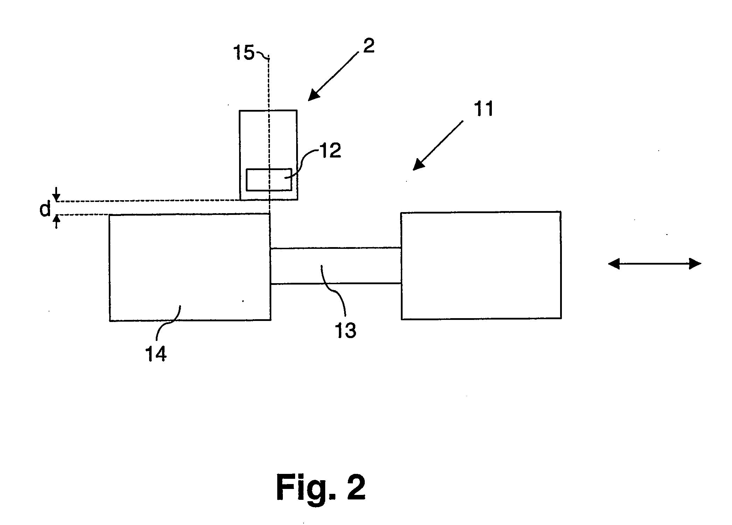

Fig. 2 zeigt in einer Seitenansicht - schematisch - eine Messvorrichtung beim Einsatz in einem Servoventil. Der Aufbau ist grundsätzlich ähnlich wie in Fig. 1, wobei gleiche Bezugszeichen gleiche Bauteile bezeichnen. Im Unterschied zu Fig. 1 wird bei der Vorrichtung gemäß Fig. 2 jedoch nicht die Position einer Düsennadel sondern die Position eines Servoventils 11 bestimmt. Das Servoventil 11 führt lineare Bewegungen in der durch den Doppelpfeil gekennzeichneten Richtung aus. Der Wirbelstromsensor 2 mit Messspule 12 ist quer zur Bewegungsrichtung des Servoventils 11 in einem festen Abstand d angeordnet. Die Markierung 6, gegen die gemessen wird, ist durch die Kante 9 definiert, die durch den Übergang zwischen Ventilschaft 13 und Ventilgehäuse 14 gebildet ist. In der Grundposition liegt die Kante 9 exakt auf der Mittelachse 15 der Messspule 12. Das Messverfahren zur Überwachung der Ventilstellung ist analog dem in Zusammenhang mit Fig. 1 beschriebenen Verfahren.

Bei einer erfindungsgemäßen Vorrichtung ist zusätzlich zu dem in Fig. 2 dargestellten Sensor 2 ein weiterer Sensor vorgesehen. Entsprechend der obigen Erläuterung der Grundposition des dargestellten Sensors 2 stimmt die andere Kante des Messobjekts 1 (in Fig. 2 die obere Kante) in der Grundposition mit der Mittelachse des weiteren Sensors überein.

## Patentansprüche

1. Messvorrichtung zur Erfassung der Position eines elektrisch leitfähigen Messobjekts (1) mit einem kontaktlos arbeitenden Wirbelstromsensor (2), wobei das Messobjekt (1) eine Markierung (6) aufweist und in einer vorgebbaren Richtung linear hin und her bewegbar ist, und wobei der Wirbelstromsensor (2) quer zur Bewegungsrichtung des Messobjekts (1) und in einem festen Abstand zum Messobjekt (1) im Bereich der Markierung (6) angeordnet ist, so dass bei einer Bewegung des Messobjekts (1) die Markierung unterschiedlich stark in den Bereich des elektromagnetischen Feldes des Wirbelstromsensors (2) eindringt, wodurch eine über einen vorgegebenen Messbereich hinweg zumindest weitgehend linear verlaufende Signaländerung am Wirbelstromsensor (2) hervorgerufen wird,
**dadurch gekennzeichnet, dass** die Markierung (6) durch zwei stufenförmig ausgebildete Kanten (9) gebildet ist und zwei Wirbelstromsensoren (2) vorgesehen sind, die in einer Grundpositionierung derart angeordnet sind, dass die eine Kante (9) des Messobjekts (1) mit der Mittelachse (15) des einen Wirbelstromsensors (2) und die andere Kante (9) des Messobjekts (1) mit der Mittelachse (15) des anderen Wirbelstromsensors (2) übereinstimmt.

2. Messvorrichtung nach Anspruch 1, **dadurch gekennzeichnet, dass** das Messobjekt (1) zumindest bereichsweise eine stab- oder stangenähnliche Form aufweist.

3. Messvorrichtung nach Anspruch 1 oder 2, **dadurch gekennzeichnet, dass** das Messobjekt (1) zylinderförmig ausgebildet ist.

4. Messvorrichtung nach einem der Ansprüche 1 bis 3, **dadurch gekennzeichnet, dass** durch die beiden Kanten (9) am Messobjekt (1) eine Ausnehmung gebildet ist, die vorzugsweise den Wirbelstromsensoren (2) zugewandt ist.

5. Messvorrichtung nach Anspruch 4, **dadurch gekennzeichnet, dass** durch die beiden Kanten (9) am Messobjekt (1) eine ringförmig umlaufende Nut (7) gebildet ist.

6. Messvorrichtung nach einem der Ansprüche 1 bis 5, **dadurch gekennzeichnet, dass** das Messobjekt (1) mechanisch mit einer Düsennadel (3) einer Einspritzdüse (4) gekoppelt ist oder dass das Messobjekt (1) als Düsennadel (3) einer Einspritzdüse (4) ausgestaltet ist.

7. Messvorrichtung nach einem der Ansprüche 1 bis 5, **dadurch gekennzeichnet, dass** das Messobjekt (1) mechanisch mit einem Servoventil (11) einer Einspritzdüse (4) gekoppelt ist oder dass das Messobjekt (1) als Servoventil (11) einer Einspritzdüse (4) ausgestaltet ist.

8. Messvorrichtung nach Anspruch 6 oder 7, **dadurch gekennzeichnet, dass** die Wirbelstromsensoren (2) in die Gehäusewandung einer Einspritzdüse (4) eingebaut sind.

9. Messvorrichtung nach Anspruch 8, **dadurch gekennzeichnet, dass** die Stirnseiten der Wirbelstromsensoren (2) zumindest annähernd bündig mit der Innenwand des Gehäuses abschließen.

10. Messvorrichtung nach einem der Ansprüche 1 bis 9, **dadurch gekennzeichnet, dass** die Wirbelstromsensoren (2) mit einem elektrischen Schwingkreis gekoppelt sind.

11. Verfahren zur Erfassung der Position eines elektrisch leitfähigen Messobjekts (1) mit einem kontaktlos arbeitenden Wirbelstromsensor (2), insbesondere unter Einsatz einer Vorrichtung nach einem der Ansprüche 1 bis 10, wobei das Messobjekt (1) in einer vorgebbaren Richtung linear hin und her bewegbar ist und wobei eine Markierung (6) am Messobjekt (1) bereitgestellt wird und der Wirbelstromsensor (2) quer zur Bewegungsrichtung des Messobjekts (1) und in einem festen Abstand zum Messobjekt (1) im Bereich der Markierung (6) angeordnet wird, so dass bei einer Bewegung des Messobjekts (1) die Markierung unterschiedlich stark in den Bereich des elektromagnetischen Feldes des Wirbelstromsensors (2) eindringt, wodurch eine über einen vorgegebenen Messbereich hinweg zumindest weitgehend linear verlaufende Signaländerung am Wirbelstromsensor (2) hervorgerufen wird,
**dadurch gekennzeichnet, dass** die Markierung (6) durch zwei stufenförmig ausgebildete Kanten (9) gebildet ist und zwei Wirbelstromsensoren (2) vorgesehen werden, die in einer Grundpositionierung derart angeordnet werden, dass die eine Kante (9) des Messobjekts (1) mit der Mittelachse (15) des einen Wirbelstromsensors (2) und die andere Kante (9) des Messobjekts (1) mit der Mittelachse (15) des anderen Wirbelstromsensors (2) übereinstimmt.

## Claims

1. Measuring device for recording the position of an electrically conducting object (1) for measurement with an eddy-current sensor (2) working in a contactless manner,
wherein the object (1) for measurement comprises a marking (6) and can be moved linearly back and forth in a predeterminable direction, and wherein the eddy-current sensor (2) is disposed transversely to the direction of movement of the object (1) for measurement and at a fixed distance from the object (1) for measurement in the region of the marking (6), so that a movement of the object (1) for measurement causes the marking to penetrate to a varying degree into the region of the electromagnetic field of the eddy-current sensor (2), thereby producing a signal change at the eddy-current sensor (2) which is at least largely linear over a predetermined measuring range,
**characterised in that** the marking (6) is formed by two step-shaped edges (9) and two eddy-current sensors (2) are provided which are disposed in a normal location such that one edge (9) of the object (1) for measurement corresponds with the centre axis (15) of one eddy-current sensor (2) and the other edge (9) of the object (1) for measurement corresponds with the centre axis (15) of the other eddy-current sensor (2).

2. Measuring device according to Claim 1, **characterised in that** the object (1) for measurement has a rod- or strand-like shape at least in regions.

3. Measuring device according to Claim 1 or 2, **characterised in that** the object (1) for measurement is cylindrical.

4. Measuring device according to any one of Claims 1 to 3, **characterised in that** a recess, which preferably faces the eddy-current sensors (2), is formed by the two edges (9) on the object (1) for measurement.

5. Measuring device according to Claim 4, **characterised in that** a groove (7) extending around in the shape of a ring is formed by the two edges (9) on the object (1) for measurement.

6. Measuring device according to any one of Claims 1 to 5, **characterised in that** the object (1) for measurement is mechanically coupled to a nozzle needle (3) of an injection nozzle (4) or that the object (1) for measurement is configured as a nozzle needle (3) of an injection nozzle (4).

7. Measuring device according to any one of Claims 1 to 5,
**characterised in that** the object (1) for measurement is mechanically coupled to a servo valve (11) of an injection nozzle (4) or that the object (1) for measurement is configured as a servo valve (11) of an injection nozzle (4).

8. Measuring device according to Claim 6 or 7, **characterised in that** the eddy-current sensors (2) are fitted into the housing wall of an injection nozzle (4).

9. Measuring device according to Claim 8, **characterised in that** the front sides of the eddy-current sensors (2) are at least approximately flush with the inner wall of the housing.

10. Measuring device according to any one of Claims 1 to 9, **characterised in that** the eddy-current sensors (2) are coupled to an electrical resonant circuit.

11. Method for recording the position of an electrically conducting object (1) for measurement with an eddy-current sensor (2) working in a contactless manner, in particular using a device according to any one of Claims 1 to 10, wherein the object (1) for measurement can be moved linearly back and forth in a predeterminable direction, and wherein a marking (6) is provided on the object (1) for measurement and the eddy-current sensor (2) is disposed transversely to the direction of movement of the object (1) for measurement and at a fixed distance from the object (1) for measurement in the region of the marking (6), so that a movement of the object (1) for measurement causes the marking to penetrate to a varying degree into the region of the electromagnetic field of the eddy-current sensor (2), thereby producing a signal change at the eddy-current sensor (2) which is at least largely linear over a predetermined measuring range,
**characterised in that** the marking (6) is formed by two step-shaped edges (9) and two eddy-current sensors (2) are provided which are disposed in a normal location such that one edge (9) of the object (1) for measurement corresponds with the centre axis (15) of one eddy-current sensor (2) and the other edge (9) of the object (1) for measurement corresponds with the centre axis (15) of the other eddy-current sensor (2).

## Revendications

1. Dispositif de mesure pour relever la position d'un objet de mesure conducteur électrique (1) au moyen d'un capteur à courants de Foucault (2) travaillant sans contact, dans lequel l'objet de mesure (1) présente un marquage (6) et peut se déplacer linéairement aller-retour dans une direction donnée et dans lequel le détecteur à courants de Foucault (2) est disposé transversalement à la direction du déplacement de l'objet de mesure (1) et à un intervalle fixe par rapport à l'objet de mesure (1) dans la zone du marquage (6), de façon que pour un mouvement de l'objet de mesure (1) le marquage pénètre plus ou moins fortement dans la zone du champ électromagnétique du détecteur à courants de Foucault lors du mouvement de l'objet de mesure (1), ce qui provoque, sur le détecteur à courants de Foucault, une variation du signal s'étendant au moins très linéairement sur une zone de mesure prédéterminée,
**caractérisé en ce que** le marquage (6) est formé par deux bords (9) formés en gradin et que deux détecteurs à courants de Foucault (2) sont prévus qui sont disposés dans une position de base telle que l'un des bords (9) de l'objet de mesure coïncide avec l'axe central (15) de l'un des détecteurs à courants de Foucault (2) et l'autre bord (9) de coïncide avec l'axe central (15) de l'autre détecteur à courants de Foucault (2).

2. Dispositif de mesure selon la revendication 1, **caractérisé en ce que** l'objet de mesure (1) présente au moins par secteurs une forme de barre ou de barreau.

3. Dispositif de mesure selon la revendication 1 ou 2, **caractérisé en ce que** l'objet de mesure (1) est cylindrique.

4. Dispositif de mesure selon l'une des revendications 1 à 3, **caractérisé en ce qu'**un évidemment est formé par les deux bords (9) sur l'objet de mesure (1), qui est de préférence tourné vers les détecteurs à courants de Foucault (2).

5. Dispositif de mesure selon la revendication 4, **caractérisé en ce qu'**une rainure annulaire (7) est formée par les deux bords (9) sur l'objet de mesure (1),

6. Dispositif de mesure selon l'une des revendications 1 à 5, **caractérisé en ce que** l'objet de mesure (1) est couplé mécaniquement au pointeau (3) d'une buse d'injection (4) ou que l'objet de mesure (1) est conformé en pointeau (3) d'une buse d'injection (4).

7. Dispositif de mesure selon l'une des revendications 1 à 5, **caractérisé en ce que** l'objet de mesure (1) est couplé mécaniquement avec une servovanne (11) d'une buse d'injection (4) ou que l'objet de mesure (1) est conformé en servovanne (11) d'une buse d'injection (4).

8. Dispositif de mesure selon la revendication 6 ou 7, **caractérisé en ce que** les détecteurs à courants de Foucault (2) sont montés dans la paroi du boitier d'une buse d'injection (4).

9. Dispositif de mesure selon la revendication 8, **caractérisé en ce que** les faces frontales des détecteurs à courants de Foucault (2) se raccordent au moins à peu près à franc bord avec la paroi interne du boitier.

10. Dispositif de mesure selon l'une des revendications 1 à 9, **caractérisé en ce que** les détecteurs à courants de Foucault (2) sont couplés à un circuit électrique oscillant.

11. Procédé Dispositif de mesure pour relever la position d'un objet de mesure conducteur électrique (1) au moyen d'un capteur à courants de Foucault (2) travaillant sans contact, notamment en utilisant le dispositif selon l'une des revendications 1 à 10, dans lequel l'objet de mesure (1) peut se déplacer linéairement aller-retour dans une direction donnée et un marquage est pratiqué sur l'objet de mesure (1) et le capteur à courants de Foucault (2) est disposé transversalement à la direction du déplacement de l'objet de mesure (1) et à un intervalle fixe par rapport à l'objet de mesure (1) dans la zone du marquage (6), de façon que, pour un mouvement de l'objet de mesure (1), le marquage pénètre plus ou moins fortement dans la zone du champ électromagnétique du détecteur à courants de Foucault lors du mouvement de l'objet de mesure (1), ce qui provoque, sur le détecteur à courants de Foucault, une variation du signal s'étendant au moins très linéairement sur une zone de mesure prédéterminée,
**caractérisé en ce que** le marquage (6) le marquage (6) est formé par deux bords (9) formés en gradin et que deux détecteurs à courants de Foucault (2) sont prévus qui sont disposés dans une position de base telle que l'un des bords (9) de l'objet de mesure coïncide avec l'axe central (15) de l'un des détecteurs à courants de Foucault (2) et l'autre bord (9) de coïncide avec l'axe central (15) de l'autre détecteur à courants de Foucault (2).
